# EUROPEAN PATENT APPLICATION

(11) **EP 4 760 581 A1**
(43) Date of publication of application: **17.06.2026**
(21) Application number: 25222083.5
(22) Date of filing: 10.12.2025
(51) Int. Cl.: G06F 30/12, G06F 30/17, G06F 30/27

(54) **SYSTEM AND METHOD FOR AUTOMATIC RECOGNITION AND CONSTRAINT FOR FASTENER**

(30) Priority: 10.12.2024 US 202418975513
(71) Applicant: Dassault Systemes SolidWorks Corporation, Waltham, MA 02451-1223 (US)
(72) Inventor: Birkett-Smith, Nicholas Constantine, Cambridge (GB); Agrawal, Saurabh, Bangalore (IN); Brooking, Christopher, Cambridge (GB)
(74) Representative: Bandpay & Greuter

(57) **Abstract**

A method automatically recognizes and constrains a fastener component of a modeled assembly displayed in a CAD environment. The method detects a drag of a component dragged near the assembly, receives a preview image of the dragged component, and provides the preview image to a trained fastener classification neural network. A fastener classification inference classifying the dragged component as a fastener is received from the neural network. A fastener receptacle in proximity to the drag location is identified. A fastener mating face and a fastener receptacle mating face are determined, and the fastener is constrained with the fastener receptacle. The CAD system graphically depicts the fastener as constrained with the fastener receptacle.

## Description

### FIELD OF THE INVENTION

The present invention relates to model manipulation and implementation of assemblies for manufacture, and more particularly, is related to automating the categorization and constraint of assembly fasteners.

### BACKGROUND OF THE INVENTION

Manufactured assemblies typically involve a plurality of fasteners for attaching assembly components. For example, a machine may be assembled using a large number of fasteners, such as nuts, washers, and bolts. Such fasteners must be specified as part of the design process and implemented as part of the manufacturing process. The design and manufacturing of such assemblies is often performed and/or implemented with a computer based computer aided drafting (CAD) system.

Each fastener is generally mated with (constrained by) a receptacle (hole) of an assembly component. In the CAD system, the process of constraining a fastener has typically been accomplished by a user dragging a graphical representation of a fastener over the graphical representation of a receiving hole of an assembly, where the user must manually configure the geometric constraints. For example, a bolt typically has a cylindrical shaft terminated at one end by a planar face. Constraining the bolt may involve ensuring that a first threading on the cylindrical shaft matches a second threading of a receiving receptacle, and ensuring that a proximal face of the fastener is appropriately mated with a face surrounding the assembly receptacle. Manual constraining may be cumbersome and time consuming, particularly when there is a large number of fasteners in the assembly. Therefore, there is a need in the industry to address the above mentioned shortcomings.

### SUMMARY OF THE INVENTION

Embodiments of the present invention provide a system and method for automatic recognition and constraint for fastener components. Briefly described, the present invention is directed to a method for automatically recognizing and constraining a fastener component of a modeled assembly displayed in a CAD environment. The method detects a drag of a component dragged near the assembly, receives a preview image of the dragged component, and provides the preview image to a trained fastener classification neural network. A fastener classification inference classifying the dragged component as a fastener is received from the neural network. A fastener receptacle in proximity to the drag location is identified. A fastener mating face and a fastener receptacle mating face are determined, and the fastener is constrained with the fastener receptacle. The CAD system graphically depicts the fastener as constrained with the fastener receptacle.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.
FIG. 1A is a schematic diagram showing an exemplary first embodiment where a fastener component is dragged toward an assembly in a CAD environment.
FIG. 1B is a schematic diagram showing the fastener component mated to the assembly of FIG. 1A.
FIG. 2 is a schematic diagram of an exemplary embodiment of a CAD hosted system for recognizing and constraining a fastener component.
FIG. 3 is a flowchart of an exemplary method for training a neural network to classify and recognize a dragged component as a fastener.
FIG. 4 is a flowchart of an exemplary method for automatically recognizing and constraining a dragged fastener to an assembly in a CAD environment.
FIG. 5 is a flowchart providing further detail for automatic constraint for a recognized fastener component as per FIG. 4.
FIG. 6 is a schematic diagram illustrating an example of a system for executing functionality of the present invention.
FIG. 7A is a screenshot of a component window of a CAD environment displaying a selected bolt component.
FIG. 7B is a screenshot of a component window of a CAD environment displaying a selected nut component.
FIG. 8 is a flowchart of an exemplary method embodiment for determining concentric and coincident mates for recognized (classified) fasteners.
FIG. 9 is a flowchart detailing the determination of a concentric mate for a bolt for the method of FIG. 8.
FIG. 10 is a flowchart detailing the determination of a coincident mate for a bolt for the method of FIG. 8.
FIG. 11 is a flowchart detailing the determination of a concentric mate for a nut or washer for the method of FIG. 8.
FIG. 12 is a flowchart detailing the determination of a coincident mate for a nut or washer for the method of FIG. 8.

### DETAILED DESCRIPTION

The following definitions are useful for interpreting terms applied to features of the embodiments disclosed herein, and are meant only to define elements within the disclosure.

As used within this disclosure, an "assembly" refers to a workpiece being modeled in a CAD environment, for example, a machine or a construct. An assembly generally includes a plurality of components.

As used in this disclosure, a "component" refers to an element of a displayed assembly in a CAD environment, or an element to be added to an assembly, for example, by being dragged from a parts list into a display window depicting the assembly.

As used within this disclosure, a "fastener" refers to a component used to attach (fasten) two or more other components together. Examples of concentric fasteners include, but are not limited to nuts, bolts, pins, split pins, and washers. Other fasteners, such as cam fasteners, are also possible.

As used within this disclosure, a "pin" refers to a (headless) cylindrical fastener. A pin may be unthreaded, fully threaded, or partially threaded.

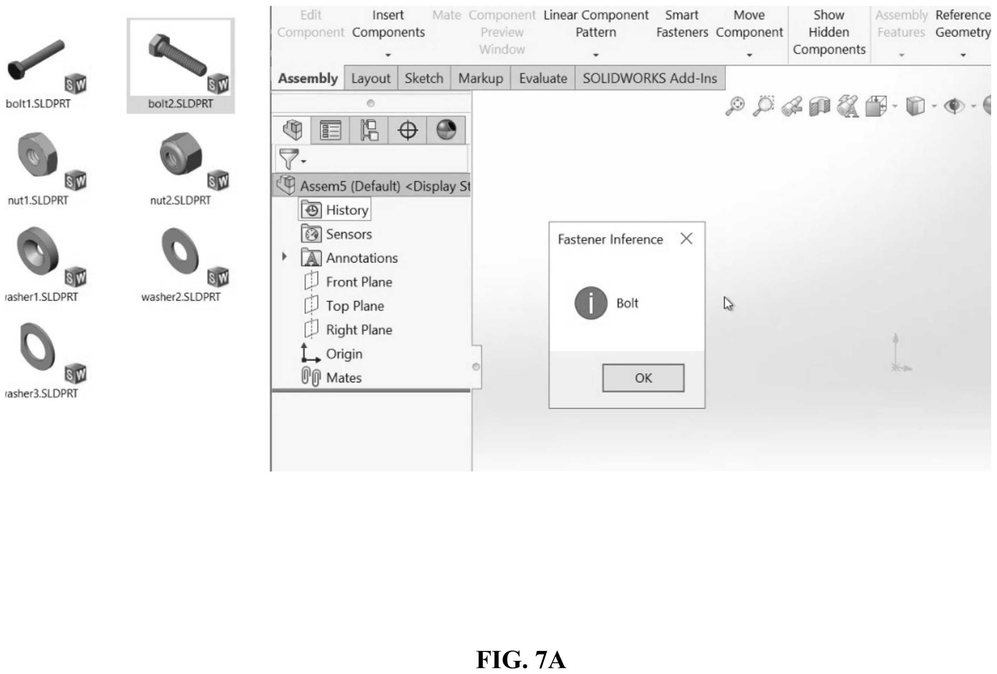

As used within this disclosure, a "bolt" refers to a fastener (FIG. 7A) with a cylindrical shaft having a head disposed at one end of the shaft. The shaft may be unthreaded, fully threaded, or partially threaded. The head may be, for example, cylindrical, hemispherical, or conical, having a maximum radius larger than the shaft radius. The profile of the head may be, for example, a circle or a polygon, and the distal face of the head may be smooth, may have a recess (for example, to receive a bit such as a flat head or Phillips screwdriver bit, or Allen wrench, among others), or may have a projecting portion.

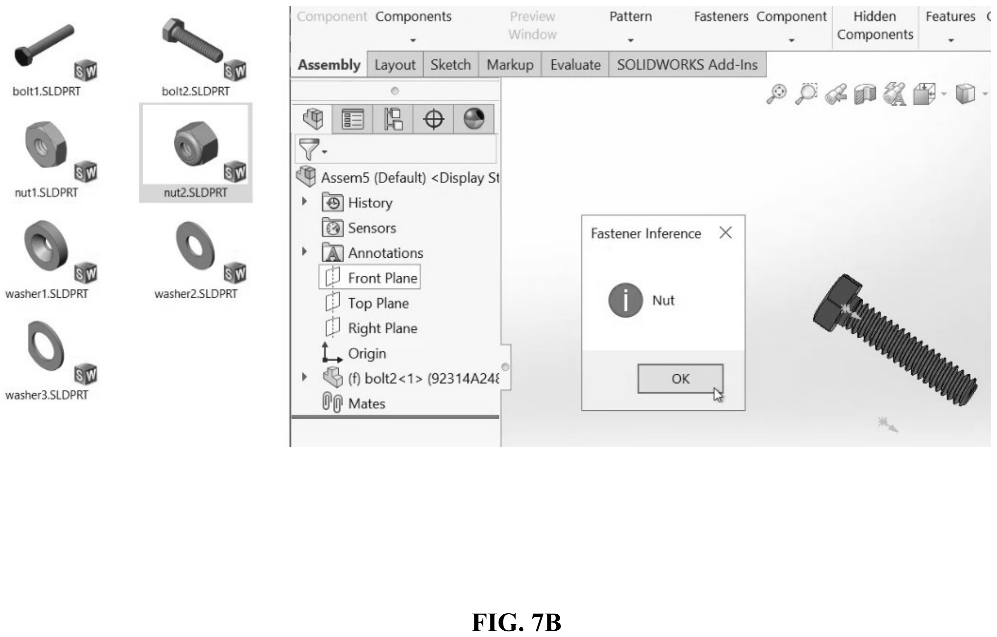

As used within this disclosure, a "nut" refers to a fastener (FIG. 7B) having, for example, two parallel planar surfaces and a concentric threaded hole disposed between the two planar faces.

As used within this disclosure, a "constraint" refers to a rule or limitation that defines one or more geometric relationships between different components of a modeled assembly, controlling aspects such as size, position, and orientation. A constraint restricts how components can move or be manipulated within the modeled assembly.

As used within this disclosure, a "drag" refers as the selecting and moving of a component in a graphical user interface (GUI, for example, the GUI of a CAD environment) using a user interface device such as a mouse, track pad, touch screen, or virtual reality system, from a component source list or menu to a graphics area of the display screen depicting a modeled assembly.

As used within this disclosure, "transfer learning" refers to a machine learning technique that uses knowledge gained from one task to improve the performance of a model on a related task. Transfer learning may be analogous to how humans learn new skills by applying previously acquired knowledge. Transfer learning may also be referred to as learning to learn, knowledge consolidation, and inductive transfer.

As used within this disclosure, a "topography walk" refers to a process of systematically reviewing each of a plurality of geometric surfaces of an assembly component to determine their suitability for a particular purpose, for example, mating with another system component.

As used within this disclosure a "concentric face" refers to a cylindrical face of a fastener or receptacle.

As used within this disclosure, a "coincident face" refers to a planar or conical face coincident to the concentric face.

As used within this disclosure, a "mate" refers to each of two faces where the first face and the second face are constrained by one another.

As used within this disclosure, a "descriptor" refers to a data structure of parameters for a component of a CAD model including data describing geometric features of the component. For example, geometric data for a fastener may include dimensions such as a length, width, relationship angle, radius, threading of a component feature, among others.

Reference will now be made in detail to embodiments of the present invention, examples of which are illustrated in the accompanying drawings. Wherever possible, the same reference numbers are used in the drawings and the description to refer to the same or like parts.

As noted in the background section, manually constraining a fastener with an assembly component in a CAD environment may be cumbersome and time consuming, particularly when a typical assembly may involve dozens or even hundreds of fasteners.

Some CAD systems offer shortcuts for constraining fasteners that involve prerequisite steps to prepare fasteners to have specific attributes supplied to them, such that dragging the fasteners into the assembly causes the CAD system to look for receptacles with appropriate attributes to create proper restraints. Similarly, other existing shortcuts involve selecting a specific piece of fastener geometry, for example, an edge between the shaft of a bold and the face of a bolt head, and dragging by the selected face with a modifier key to trigger automatic creation of constraints.

In contrast, exemplary embodiments of the present invention provide a system and method for automatically recognizing a user dragged component as a fastener and automatically constraining the recognized fastener with an assembly receptacle in the proximity of the dragged fastener.

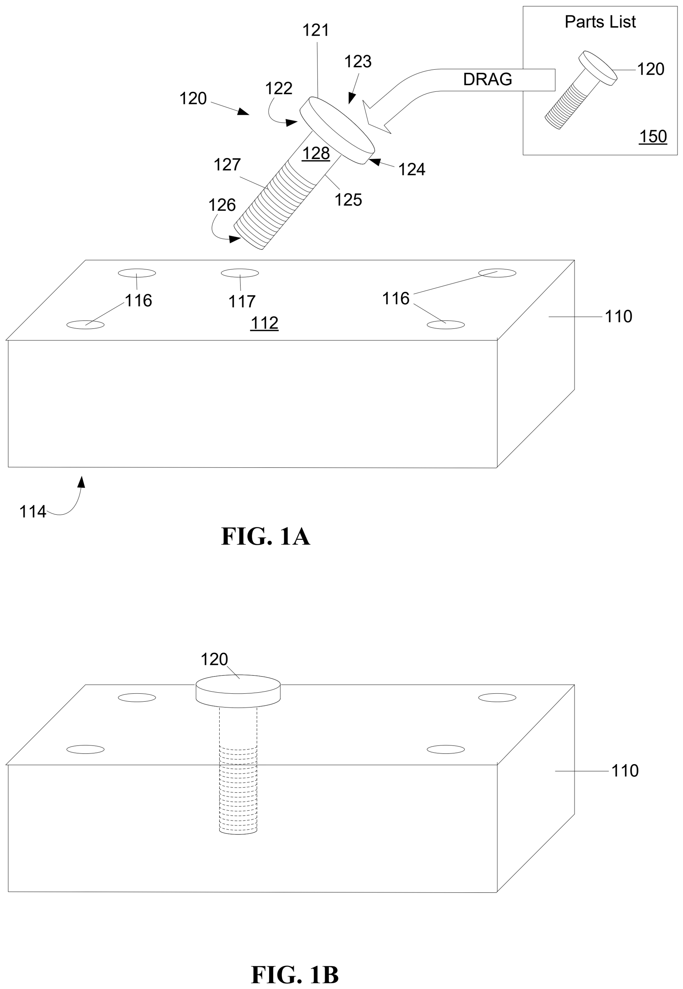

As shown by FIG. 1A, an exemplary fastener, bolt 120, has a cylindrical head 121 and a concentric cylindrical shaft 125. The head 121 has a proximal face 122 (adjacent to the shaft 125) a distal face 123 (opposite the proximal face 122), and a cylindrical face 124. The shaft 125 has a threaded portion 127, a non-threaded cylindrical face 128 and a distal shaft face 126.

An assembly 110 has a top surface 112 with a plurality of receptacle holes 116, 117 passing through the assembly top surface 112 to the interior of the assembly 110. Each receptacle hole 116, 117 has an internal cylindrical face (not shown) internal to the assembly 110. Each receptacle hole 116, 117 has either a base face (not shown) where the receptacle hole 116, 117 ends within the assembly interior, or an egress hole (not shown) emerging from a bottom face 114 of the assembly 110. Under a first exemplary embodiment, a user of a CAD system drags a preview image of a component 120 from a parts list 150 toward a receptacle hole 117 in the assembly 110 according to the proximity of the dragged component 120 to the receptacle hole 117. For example, the proximity may be a modifiable system parameter. The embodiment identifies whether the component 120 is a fastener, determines whether mating surfaces may be compatible between the fastener 120 and the indicated receptacle hole 117, automatically determines the corresponding constraints, and mates the fastener 120 to the receptacle hole 117 of the assembly 110, as shown by FIG. 1B.

Each of the relationship between the surfaces of the fastener 120 and the assembly 110 is referred to as a constraint which secures the fastener to the assembly. For the example of FIG. 1A, contraints include the shaft face 128 mating with the receptacle hole 117, the shaft threaded portion 127 mating with receiving threads (not shown) of the receptacle hole 117, and the head proximal face 122 mating with the assembly top surface 112. While FIGS. 1A-1B show a simplistic example, in some scenarios there may be additional constraints between the bolt 120 and other assembly components, for example, an intermediate component (not shown) that the bolt 120 fastens to the assembly 110. Under the embodiments, once the fastener 120 has been recognized, the mating faces (constraints) are automatically determined and the fastener 120 is automatically mated with the receptacle hole 117, as described further below.

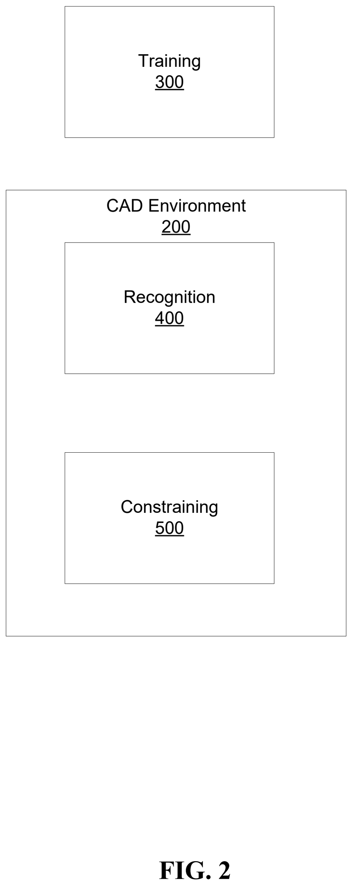

As shown by FIG. 2, an exemplary system embodiment is hosted by a CAD environment 200, for example SolidWorks. The system performs three major functional tasks performed by respective modules: a training module 300 that trains a convolutional neural network based classification model to recognize and categorize fastener components, a recognition module 400 that detects the drag of a component within the CAD environment 200 and determines whether the dragged component is a fastener, and a constraining module 500 that automatically determines the mating faces on the fastener and determines constraints of the fastener and a corresponding assembly receptacle hole in proximity to the dragged fastener. The training module 300 is typically independent of the CAD environment 200, such that the classification model trained by the training module is accessible to the recognition module 400 and the constraining module 500 within the CAD environment 200.

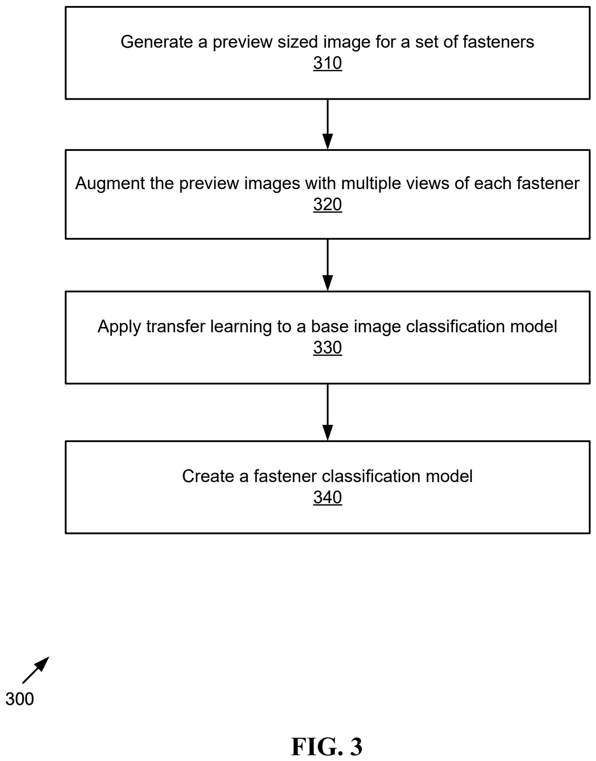

Under a first exemplary embodiment, a machine learning (ML) classification model is trained to generate and infer fastener types. FIG. 3 is a flowchart 300 of an exemplary method for training a neural network to classify and recognize a dragged component as a fastener. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

Preview image sized images are generated for each of several fastener parts used to train the model as shown by block 310. For example, a preview image may be a PNG file of any image resolution such as a resolution of 640(W)*480(H), and format used is PNG.

The training image data is augmented by generating multiple images for each of a plurality of single part files for fastener components, as shown by block 320, for example, the multiple images may be views of the component rotated around different axes. Transfer learning is applied to a base image classification model as shown by block 330, for example VGG16, to create a Fastener Classification Model, as shown by block 340. For example, to train the fastener classifier based on images, one may generate a large dataset containing images of all fastener types to be classified. Typically, the dataset may include thousands of images for each fastener type. CAD model transformation may be used for generating more images from limited datasets. Any image dimensions may be used, provided there is no dimension constraint applied by the machine learning model used for classification. The machine learning model is trained as per its documentation using this image dataset. Here, the model may be used as the fastener classifier model once model is trained and meets a chosen accuracy criteria.

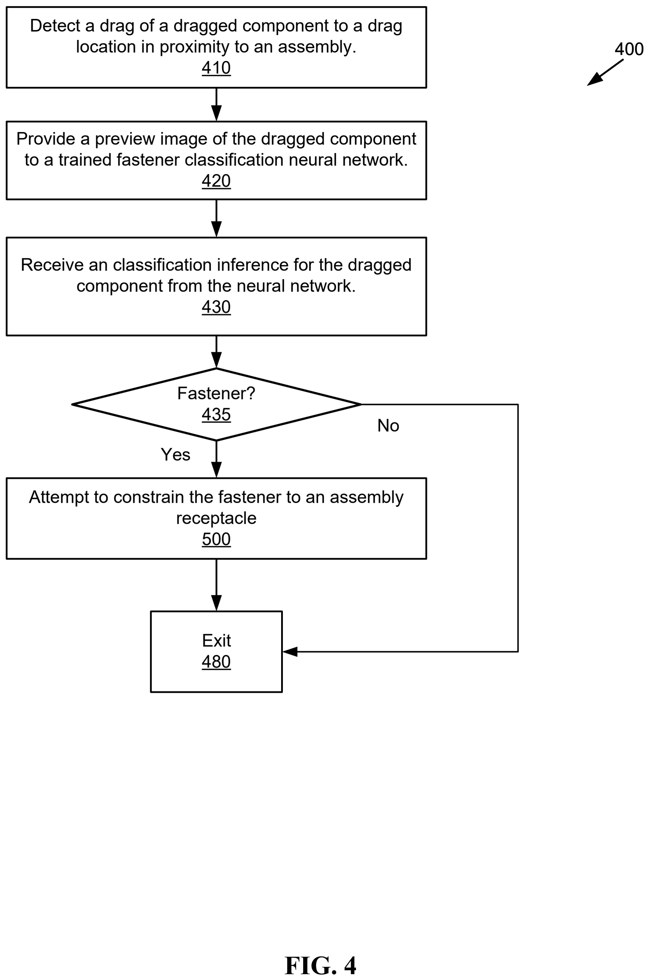

FIG. 4 is a flowchart illustrating a computer based method for automatic recognition and constraint of a fastener component 120 (FIG. 1A) in a CAD environment 200 (FIG. 2). A user drag of a component 120 (FIG. 1A) to a drag location near a hole (fastener receptacle) 117 (FIG. 1A) of a displayed assembly 110 (FIG. 1A) in a CAD environment is detected, as shown by block 410. The component drag need not be paused near the fastener receptacle 117. Here, the component 120 (FIG. 1A) may be a fastener, such as a bolt, nut, pin, or washer. The user may drag the component 120 (FIG. 1A) from any of several source locations, for example, the file system of a host computer for the CAD environment, from a platform, from other files in the software session of the user such as a parts list 150 (FIG. 1A), or from a pre-existing fastener in an assembly file or by creating a copy of a fastener component that has already been inserted into the target assembly.

The CAD environment 200 (FIG. 2) accesses a preview image for the dragged component 120 (FIG. 1A) and provides the preview image to a trained fastener classification neural network as shown by block 420. While the preview image may be a standard isometric projection image of a component routinely generated by the host CAD system (e.g., SolidWorks), the preview image may be an image sourced from outside the CAD system that is associated with the dragged component. For example, the preview image may be sourced from a web site of a part supplier for the component, as such isometric images are an industry standard.

The neural network receives the preview image and makes an inference whether or not the dragged component 120 (FIG. 1A) is fastener as shown by block 430. Here, the neural network makes an inference from the fastener classification model whether the dragged component 120 (FIG. 1A) is a fastener. The dimensions of the fastener preview image are not relevant to the embodiment recognizing the dragged component as a fastener, only determining whether or not the preview image depicts a type of fastener the neural network has been trained to recognize.

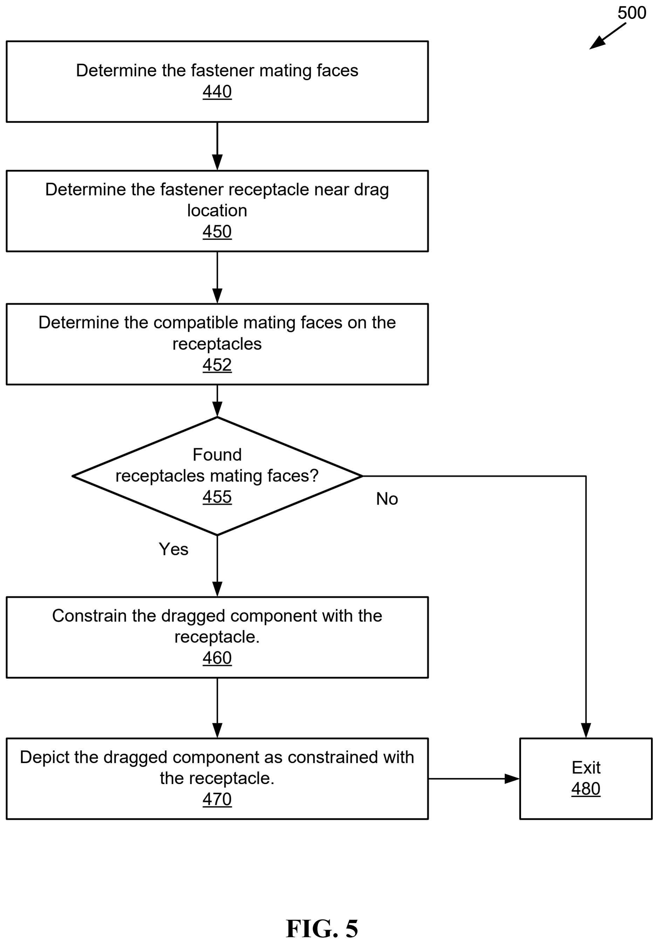

If the inference indicates the dragged component 120 is not a fastener, as per block 435 ("no" branch), the process exits, as shown by block 480. Here, the neural network returns that the classification of the dragged component 120 is unknown. If instead the neural network infers that the dragged component 120 is a fastener, as per block 435 ("yes" branch), the method attempts to constrain the fastener 120 to an assembly receptacle, as shown by block 500, which is detailed further in FIG. 5.

It should be noted that the classification inference step (block 430) does not test whether the dragged component 120 may be a mate for a receptacle 117 near the drag location. Indeed, the classification inference is made without concern regarding dimensions (scaling) of the dragged component. Advantageously, the recognition 400 does not require full CAD descriptors for the fasteners indicating the detailed geometry for every surface of each fastener.

### Constraining 500

FIG. 5 is a flowchart illustrating a computer based method for automatic constraint for a recognized fastener component 120 (FIG. 1A) in a CAD environment 200 (FIG. 2).

A fastener receptacle 117 (FIG. 1A) on the assembly 110 (FIG. 1A) in the proximity of the drag location of the classified fastener 120 is identified, as shown by block 440. For example, SolidWorks Smart Mates feature, uses this functionality. A mating face of the classified fastener 120 (FIG. 1A) is determined, as shown by block 450. Here, for example, the topology of the fastener is accessed via an API of the modeling kernel. For example, if the fastener 120 is a bolt, the cylindrical shaft 125 face and/or the head proximal face 122 may be identified as a mating surface. A potential compatible mating face for the receptacle 117 is also identified.

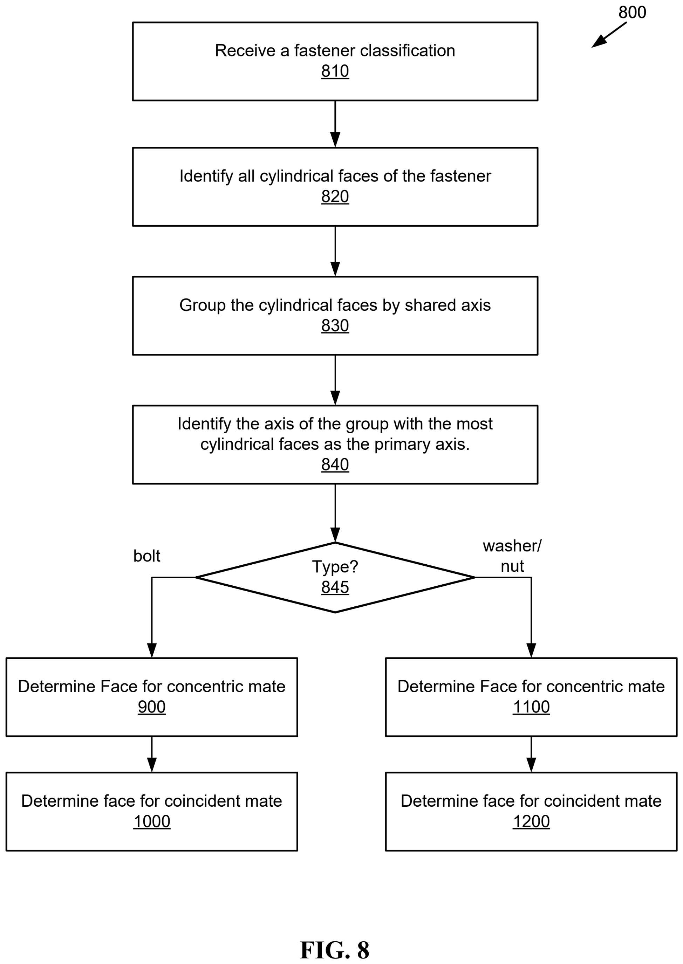

The respective geometries of the classified fastener mating face and the potential receptacle mating face are compared, as shown by block 452, for example via a topology walk of the fastener 120 and the receptacle 117, as described below with reference to FIGS. 8-12. If the topologies are compatible (as per block 455), the dragged component 120 (FIG. 1A) is constrained to the receptacle 117 (FIG. 1A), as shown by block 460. The constraining of block 460 may be similar to the constraining process when the mating surfaces have been identified by the user, rather than automatically identified as per blocks 450, 452, and 455. The CAD environment 200 depicts dragged component 120 (FIG. 1A) as constrained with the receptacle as shown by block 470 and FIG. 1B.

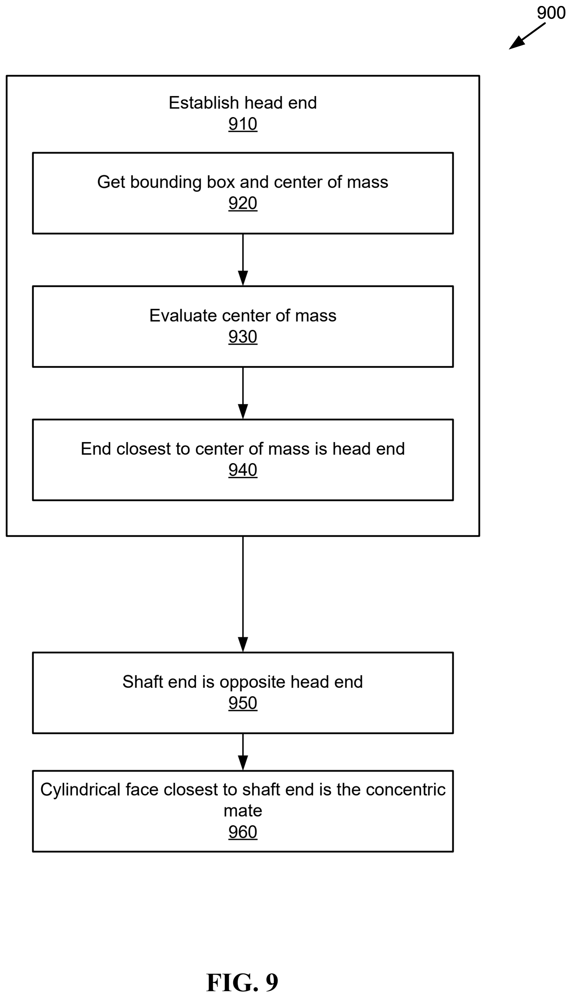

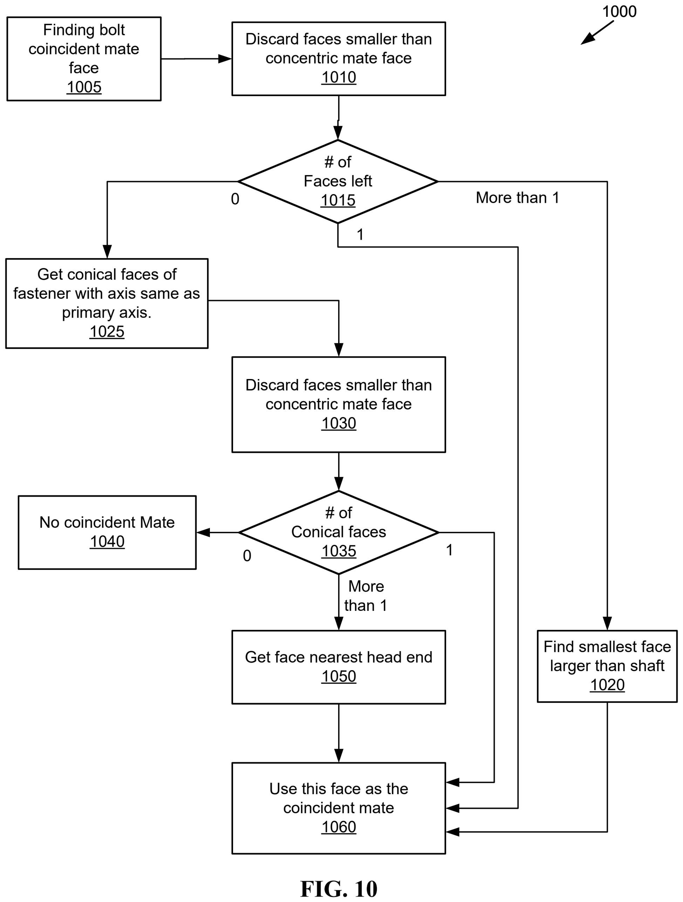

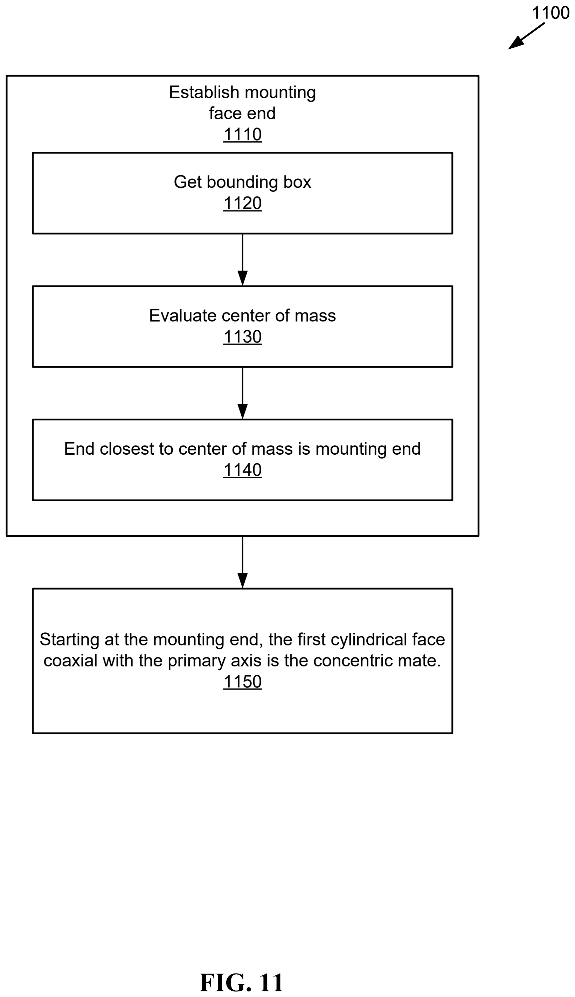

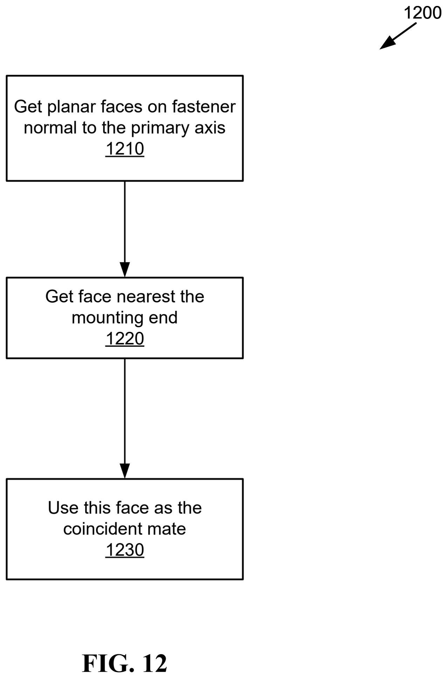

FIG. 8 is a flowchart 800 of an exemplary method embodiment for determining concentric and coincident mates for recognized (classified) fasteners. A classification for a dragged fastener is received, as shown by block 810. Under the first embodiment, the fastener may be classified as a bolt, a nut, or a washer. The cylindrical faces of the fastener are identified, as shown by block 820. Here, the preview image is solely used for classification, while faces are identified using CAD model geometry/topology. The identified cylindrical faces are grouped by their shared axis, as shown by block 830. This typically results in a single group. The fastener's primary axis is identified as the axis from the group with the most cylindrical faces, as shown by block 840. The subsequent processing is handled differently depending on the type of fastener, as shown by block 845. For bolts, the determination of concentric mates (block 900) and coincident mates (block 1000) is expanded in FIGS. 9 and 10, while for washers and nuts, the determination of concentric mates (block 1100) and coincident mates (block 1200) is expanded in FIGS. 11 and 12.

FIG. 9 is a flowchart 900 detailing the determination of a concentric mate for a bolt for the method of FIG. 8. The head end of the bolt is established, as shown by block 910, which encompasses getting a bounding box and center of mass for the bolt (block 920), and evaluating the center of mass (block 930). The end of the bolt closest to the center of mass is determined as the head end of the bolt (block 940). The end of the bolt opposite the head end is determined as the shaft end, as shown by block 950. The cylindrical face closest to the shaft end is the concentric mate, as shown by block 960.

FIG. 10 is a flowchart 1000 detailing the determination of a coincident mate for a bolt for the method of FIG. 8. After the concentric mate is found (block 960, FIG. 9), the remaining non-cylindrical faces are counted, as shown by block 1010. If there is exactly one face left (block 1015), this face is used as the coincident mate, as shown by block 1060. If there is more than one face left (block 1015) the smallest face smaller than the bolt shaft is found, as shown by block 1020, and is used as the coincident mate, as shown by block 1060.

If there are no remaining faces after the count of block 1010, the target hole is checked for being countersunk, as shown by block 1025. If the hole is not countersunk, no coincident mate is found, as shown by block 1040. If the hole is countersunk the method gets conical faces on the fastener with the same angle as the hole, as shown by block 1030. Here, the conical faces must also have the same normal direction as the hole. If there is exactly one conical face (block 1035), this face is used as the coincident mate, as shown by block 1060. If there are no conical faces, no coincident mate is found, as shown by block 1040. If there is more than one conical face (block 1035), the conical face nearest the head (block 1050) is used as the coincident mate, as shown by block 1060.

The method for determining mates is the same for nuts and washers. FIG. 11 is a flowchart 1100 detailing the determination of a concentric mate for a nut or washer for the method of FIG. 8. The mounting end of the nut/washer is established, as shown by block 1110, which encompasses getting a bounding box for the nut/washer (block 920), and evaluating the center of mass (block 1130). The end of the nut/washer closest to the center of mass is determined as the mounting end of the nut/washer (block 1140). Starting with the mounting end, the first cylindrical face coaxial with the primary axis is the concentric mate, as shown by block 1150.

FIG. 12 is a flowchart 1200 detailing the determination of a coincident mate for a nut or washer for the method of FIG. 8. The method gets the planar faces on the nut/washer normal to the primary axis, as shown by block 1210, and then the face nearest the mounting end, as shown by block 1220. This face is used as the coincident mate, as shown by block 1230.

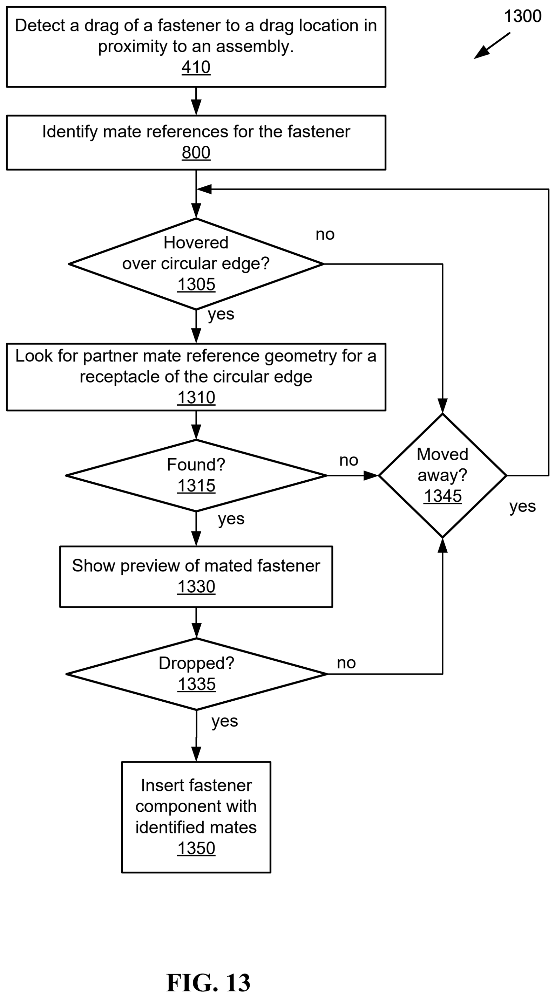

FIG. 13 is a flowchart 1300 providing an overview of an exemplary method embodiment for automatically mating a dragged fastener to an assembly receptacle. A component is dragged to a drag location in proximity to an assembly, as shown by block 410. The dragged component is identified as a fastener as described previously (see blocks 420, 430 (FIG. 4)). Mate references are identified for the fastener, as shown by block 800 (see FIG. 8). If the dragged component drag location is above a circular edge (block 1305), the method looks for a partner mate reference geometry of a receptacle of the circular edge, as shown by block 1310. If a partner mate is found (block 1315), a preview image of the mated fastener is displayed, as shown by block 1330. If the user drops the dragged fastener (e.g.,. releases the dragged fastener to complete a drag-and-drop operation), as shown by block 1335, the method inserts the fastener component with the identified mates, as shown by block 1350. If the user drags the fastener away from the receptacle, as shown by block 1345, the flow of the process returns to block 1305 and continues.

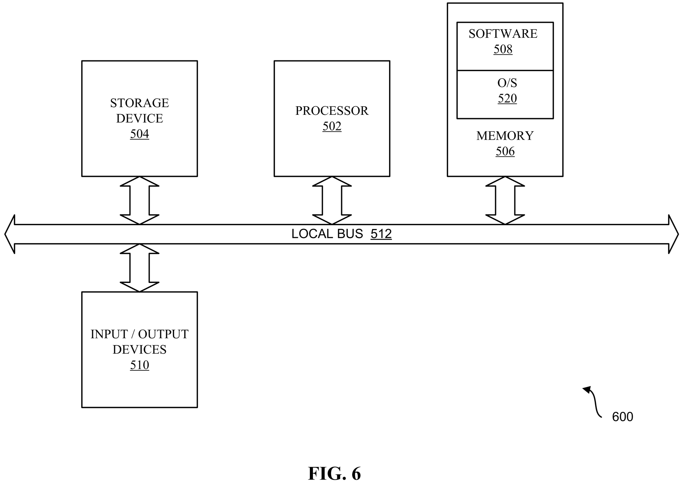

The present system for executing the functionality described in detail above may be a computer, an example of which is shown in the schematic diagram of FIG. 6. The system 600 contains a processor 502, a storage device 504, a memory 506 having software 508 stored therein that defines the abovementioned functionality, input, and output (I/O) devices 510 (or peripherals), and a local bus, or local interface 512 allowing for communication within the system 600. The local interface 512 can be, for example, but not limited to one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly software stored in the memory 506. The processor 502 can be any custom made or commercially available single core or multi-core processor, a central processing unit (CPU), an auxiliary processor among several processors associated with the present system 600, a semiconductor based microprocessor (in the form of a microchip or chip set), a microprocessor, or generally any device for executing software instructions. While FIG. 6 shows the processor as a single unit, alternatively the processor may include two or more processing units distributed across two or more locations, for example, communicating via a communication network in addition to or in place of the local interface 512.

The memory 506 can include any one or combination of volatile memory elements (*e.g.*, random access memory (RAM, such as DRAM, SRAM, SDRAM, *etc.*)), volatile memory elements (*e.g*., a hard drive, a solid state drive (SSD), a flash drive, an optical drive, tape) and nonvolatile memory elements (*e.g.*, ROM, CDROM, *etc.*)*.* Moreover, the memory 506 may incorporate electronic, magnetic, optical, holographic, and/or other types of storage media. Note that the memory 506 can have a distributed architecture, where various components are situated remotely from one another, but can be accessed by the processor 502.

The software 508 defines functionality performed by the system 600, in accordance with the present invention. The software 508 in the memory 506 may include one or more separate programs, each of which contains an ordered listing of executable instructions for implementing logical functions of the system 600, as described below. The memory 506 may contain an operating system (O/S) 520. The operating system essentially controls the execution of programs within the system 600 and provides scheduling, input-output control, file and data management, memory management, and communication control and related services.

The I/O devices 510 may include input devices, for example but not limited to, a keyboard, mouse/trackpad, haptic sensor, touchscreen, scanner, microphone, barcode reader, QR code reader, *etc.* Furthermore, the I/O devices 510 may also include output devices, for example but not limited to, a printer, display (2D, 3D, virtual reality headset), transducer, etc. Finally, the I/O devices 510 may further include devices that communicate bidirectionally via both inputs and outputs or a combined interface such as a full duplex serial bus (for example, a universal serial bus (USB)), for instance but not limited to, an interface for accessing another device, system, or network), a wireless transceiver, a copper, optical or wireless telephonic interface, a bridge, a router, or other device. The outputs may include an interface to control a manufacturing device, such as a 3D printer, a computerized numerical control (CNC) machine, and/or a milling machine, among others.

When the system 600 is in operation, the processor 502 is configured to execute the software 508 stored within the memory 506, to communicate data to and from the memory 506, and to generally control operations of the system 600 pursuant to the software 508, as explained above.

While the fasteners in the exemplary embodiments include concentric fasteners such as nuts, bolts, pins, and washers, alternative embodiments may apply the techniques disclosed above to other types of fasteners.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A computer based method for automatic recognition and constraint for a fastener component in a CAD environment displaying a depiction of an assembly, comprising the steps of:
detecting a drag of a dragged component to a drag location in proximity to the assembly;
receiving a preview image of the dragged component;
providing the preview image to a trained fastener classification neural network;
receiving a fastener classification inference for the dragged component from the trained fastener classification neural network classifying the dragged component as a fastener;
identifying a fastener receptacle of the assembly in proximity to the drag location;
determining a classified fastener mating face;
determining a fastener receptacle mating face;
constraining the fastener with the fastener receptacle; and
graphically depicting the fastener as constrained with the fastener receptacle.

2. The method of claim 1, wherein the fastener is selected from a group consisting of a bolt, a washer, a pin, and a nut.

3. The method of any one of claims 1 to 2, wherein the preview image comprises an isometric projection.

4. The method of any one of claims 1 to 3, further comprising the step of training the fastener classification neural network, wherein the training further comprises:
generating a set of preview images comprising a preview sized image for each of a plurality of fasteners; and
augmenting the set of preview images with a plurality of views of one or more of the plurality of fasteners.

5. The method of claim 4, further comprising the step of applying transfer learning to a base image classification model to create a fastener classification model.

6. The method of any one of claims 1 to 5, wherein determining a classified fastener mating face further comprises accessing a descriptor comprising geometric data for features of the fastener and performing a topography walk of geometric features of the fastener.

7. The method of claim 6, wherein determining a fastener receptacle mating face comprises performing a topography walk of geometric features of the fastener receptacle.

8. The method of claim 7, further comprising the step of comparing geometric properties of the classified fastener mating face and the fastener receptacle mating face.

9. The method of claim 7 or 8, further comprising the step of identifying a concentric mate and/or a coincident mate for the fastener.

10. A computer based system for automatic recognition and constraint for a fastener component in a CAD environment displaying a depiction of an assembly, comprising:
a training module configured to train a fastener classification neural network;
a recognition module configured to:
detect a drag of a dragged component to a drag location in proximity to the assembly;
receive a preview image of the dragged component;
provide the preview image to the trained fastener classification neural network; and
receive a fastener classification inference for the dragged component from the trained fastener classification neural network classifying the dragged component as a fastener; and
a constraining module configured to:
identify a fastener receptacle of the assembly in proximity to the drag location;
determine a classified fastener mating face;
determine a fastener receptacle mating face;
constrain the fastener with the fastener receptacle; and
graphically depict the fastener as constrained with the fastener receptacle.

11. The system of claim 10, wherein the fastener is selected from a group consisting of a bolt, a washer, a pin, and a nut.

12. The system of any one of claims 10 to 11, wherein the preview image comprises an isometric projection.

13. The system of any one of claims 10 to 12, further comprising the step of training the fastener classification neural network, wherein the training module is configured to:
generate a set of preview images comprising a preview sized image for each of a plurality of fasteners; and
augment the set of preview images with a plurality of views of one or more of the plurality of fasteners.

14. The system of any one of claims 10 to 13, wherein determining a classified fastener mating face further comprises accessing a descriptor comprising geometric data for features of the fastener and performing a topography walk of geometric features of the fastener, preferably, determining a fastener receptacle mating face comprises performing a topography walk of geometric features of the fastener receptacle.

15. A computer-program comprising instructions which, when the program is executed by a computer, cause the computer to carry out the method of any one of claims 1 to 9.
